# EUROPÄISCHE PATENTANMELDUNG

(11) **EP 1 176 371 A2**
(43) Veröffentlichungstag der Anmeldung: **30.01.2002**
(21) Anmeldenummer: 01118106.2
(22) Anmeldetag: 26.07.2001
(51) Int. Cl.: F24J 2/50, F24J 2/26

(54) **Folien-Sonnenkollektor mit transparenter Wärmedämmung**

(30) Priorität: 27.07.2000 DE 10037088
(71) Anmelder: Ortjohann, Jörg, 50825 Köln (DE)
(72) Erfinder: Ortjohann, Jörg, 50825 Köln (DE)

(57) **Zusammenfassung**

Die Erfindung betrifft einen Kollektor zur thermischen Nutzung der Sonnenenergie. Der Kollektor ist als Vakuumisolationspaneel in Sandwichbauweise ausgeführt. Zwischen vorderseitiger transparenter (2) und rückseitiger (9) Folie werden granulares Aerogel (1), Absorber (4), Rohrleitungen (6) und rückseitiges Dämmmaterial eingeschlossen und luftdicht versiegelt. Durch das Vakuum erfolgt sowohl die konstruktive Festigung der Struktur als auch die Reduktion der Wärmeleitfähigkeit insbesondere der rückseitigen Dämmung (5) auf ca. 5 mW/mK.

## Beschreibung

Die Erfindung **betrifft** einen Sonnenkollektor zur thermischen Nutzung der Sonnenenergie. Der Kollektor ist als Vakuumisolationspaneel in Sandwichbauweise ausgeführt. (*Erklärung des Begriffes Vakuumisolationspaneel (VIP): VIP bestehen z.B. aus einer Trägerplatte aus mikrostrukturierter pyrogener Kieselsäure und einem umhüllenden Folienmantel, zwischen den Folien herrscht ein Absolutdruck von einigen mbar. "Mit neuentwickelten Vakuumdämmplatten kann man die Dämmstärken - bei gleichbleibendem Dämmwert - gegenüber konventionellen Materialien um einen Faktor 5 bis 10 reduzieren", Zitat aus: http.//www.zae-bayern.de/Abteilung 2.)*

### Stand der Technik:

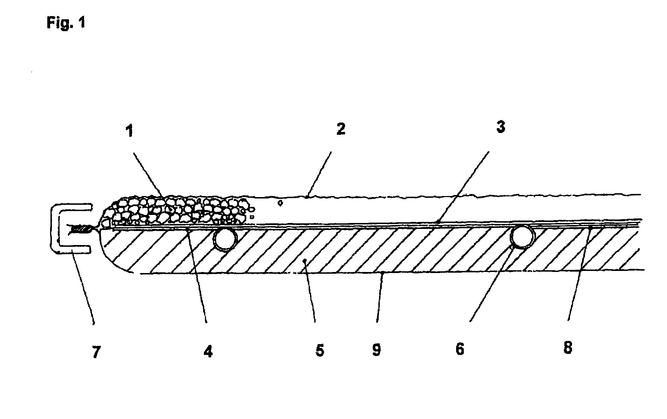

Bekannt sind sog. Vakuumflachkollektoren mit bereichsweiser Stützung der Glasscheibe (thermosolar) und Sandwichkollektoren gem. DE 197 26 330 (*Spalte 2, Zeile 12: Fig. 1a zeigt einen Schnitt durch ein Fassadenpaneel, welches z.B. auf ein Vakuum von absolut 100 mbar evakuiert ist).* Die bekannten Sandwichkollektoren weisen eine Metallwanne aus dünner Folie auf und enthalten Aerogel als frontseitige Dämmung, Materialien zur Absorption und Wärmeleitung und eine rückseitige Dämmung. Diese Kollektoren unterdrücken durch Unterdruck und Einsatz transparenter Wärmedämmaterialien zwischen Absorber und Glasscheibe die frontseitigen Wärmeverluste und sind besonders zur solaren Heizungsunterstützung und Kühlung durch ihre Effizienz sonstigen Flachkollektoren (eta 0,1 > 0,5) überlegen.

### Kritik:

Allgemein ist die Herstellung dieser unterdruckbeständigen Kollektoren insbesondere durch die Anforderungen an das Randverbundsystem und die eingesetzten Werkstoffe sehr aufwendig. Kollektoren mit transparentem Aerogel weisen zudem aufgrund der Sensibilität des Materials Probleme durch Abrieb zwischen Aerogel und Absorber mit der Langzeitbeständigkeit auf.

Der Erfindung liegt die **Aufgabe** zugrunde, einen Kollektor zu schaffen, welcher einfach hergestellt werden kann, effizient ist und insbesondere den sensiblen Materialeigenschaften der Aerogele entspricht. Einsatzgebiet sind z.B. Flachdächer von Industriehallen, Hotels, solare Nahwärmeprojekte, Heizungsunterstützung ...

Erfindungsgemäß wird diese Aufgabe durch die Gegenstände der Ansprüche 1 - 4 **gelöst**, wobei sich die folgenden **Vorteile** ergeben:
- Die Paneele können besonders einfach gefertigt werden
- Geringer Materialeinsatz
- Dünne Bauweise und äußerst geringe Gewichte

### Ausführungsbeispiele :

Fig.1 zeigt einen Kollektor, bestehend aus folgenden Bauteilen: (1) granulares Aerogel, (2) transparente Folie, (3) Dämmmaterial gegen Abrieb / Scheren, (4) Absorber, (5) rückseitiges Dämmmaterial als Vakuumisolationsmaterial, (6) Absorberrohre, (7) Randverbundsystem, (8) eine zusätzliche Dämmmatte gegen Abrieb des rückseitigen Dämmmaterials und (9) eine rückseitige Folie.

## Patentansprüche

1. Sonnenkollektor als Vakuumisolationspaneel, **dadurch gekennzeichnet, daß** ein Absorber (4) zwischen eine transparente Folie (2) und eine rückseitige Folie (9) gepackt wird und sich zwischen transparenter Abdeckung und dem Absorber (4) ein transparenter Wärmedämmstoff (1) befindet.

2. Ein Sonnenkollektor nach Anspruch 1, **dadurch gekennzeichnet, daß** zwischen dem Absorber (4) und der rückseitigen Folie (9) als rückseitiges Dämmaterial (5) ein Vakuumisolationsmaterial eingebracht ist.

3. Kollektor nach Anspruch 1 oder 2, **dadurch gekennzeichnet, daß** zwischen transparentem Wärmedämmstoff (1) und Absorber (4) ein Zusatzmaterial (3) gegen Abrieb eingebracht ist.

4. Kollektor nach Anspruch 1 bis 3, **dadurch gekennzeichnet, daß** zwischen rückseitiger Folie (9) und Absorber (4) ein Zusatzmaterial (8) eingebracht ist

5. Kollektor nach Anspruch 1 bis 4, **dadurch gekennzeichnet, daß** sich im Kollektorraum ein Gas zur Unterdrückung der Wärmeverluste befindet.

6. Kollektor nach Anspruch 1 bis 5, **dadurch gekennzeichnet, daß** sich im Kollektorraum ein Getter zur Aufnahme flüchtiger Bestandteile befindet.

7. Kollektor nach Anspruch 1 bis 6, **dadurch gekennzeichnet, daß** die transparente Folie aus Glas besteht, also daß eine rückseitige Folie an eine Glasscheibe anschließt.

8. Kollektor nach Anspruch 1 bis 6, **dadurch gekennzeichnet, daß** der beschriebene Folienkollektor zum Schutz in ein zweites Gehäuse eingebracht wird, das zumindest eine transparente Abdeckung aufweist.

9. Kollektor nach Anspruch 1 bis 7, **dadurch gekennzeichnet, daß** der beschriebene Folienkollektor einen festen Rahmen aufweist.
